# EUROPEAN PATENT APPLICATION

(11) **EP 3 255 846 A1**
(43) Date of publication of application: **13.12.2017**
(21) Application number: 15887266.3
(22) Date of filing: 04.11.2015
(51) Int. Cl.: H04L 12/803, H04L 12/761

(54) **MULTICAST GROUP ALLOCATION METHOD, CENTRALIZED CONTROL POINT, AND MULTICAST ROUTER**

(30) Priority: 27.03.2015 CN 201510142646
(71) Applicant: Huawei Technologies Co., Ltd., Longgang District Shenzhen, Guangdong 518129 (CN)
(72) Inventor: XIE, Yinqiao, Shenzhen Guangdong 518129 (CN); QIN, Feng, Shenzhen Guangdong 518129 (CN)
(74) Representative: Pfenning, Meinig & Partner mbB
(86) International application number: PCT/CN2015/093805
(87) International publication number: WO 2016/155312

(57) **Abstract**

Embodiments of the present invention provide a multicast group allocation method, a centralized control point, and a multicast router. The multicast group allocation method in the embodiments of the present invention includes: determining, by a centralized control point, a correspondence between at least two multicast groups and at least two RPs in a rendezvous point set according to information about the at least two multicast groups and information about the at least two RPs, where in the correspondence between the at least two multicast groups and the at least two RPs, each RP is corresponding to a same quantity of multicast groups; evenly allocating, by the centralized control point, the at least two multicast groups to the at least two RPs according to the correspondence between the at least two multicast groups and the at least two RPs; and diffusing, by the centralized control point, the correspondence between the at least two multicast groups and the at least two RPs to all multicast routers on a PIM network. In the embodiments of the present invention, load balancing can be ensured between different RPs of the at least two RPs.

## Description

This application claims priority to Chinese Patent Application No. 201510142646.8, filed with the Chinese Patent Office on March 27, 2015 and entitled "MULTICAST GROUP ALLOCATION METHOD, CENTRALIZED CONTROL POINT, AND MULTICAST ROUTER", which is incorporated herein by reference in its entirety.

### TECHNICAL FIELD

Embodiments of the present invention relate to multicast technologies, and in particular, to a multicast group allocation method, a centralized control point, and a multicast router.

### BACKGROUND

On a Protocol Independent Multicast (English: Protocol Independent Multicast, PIM for short) network, a designated router (English: designated router, DR for short) connected to a multicast source device may determine, according to a received multicast stream sent by the multicast source, a multicast group (English: multicast group) corresponding to the multicast stream, and transmit the multicast stream to all routers in the multicast group corresponding to the multicast stream.

To reduce overheads resulting from generation and exchange of routing information between routers on the PIM network, a DR corresponding to each multicast group of at least two multicast groups on the PIM network determines, according to at least two received multicast streams, a multicast group corresponding to each multicast stream, and selects, for the multicast group corresponding to each multicast stream, one candidate-rendezvous point (English: candidate-rendezvous point, C-RP for short) from at least two preset C-RPs. That is, one C-RP is selected for each multicast group as a rendezvous point (English: rendezvous point, RP for short) corresponding to each multicast group, so that each multicast group is corresponding to one RP.

The RP corresponding to each multicast group is determined according to the multicast group corresponding to each multicast stream by the DR corresponding to each multicast group. Different multicast groups may be corresponding to a same RP or different RPs. That is, one RP may serve multiple multicast groups. Therefore, it is difficult to control a quantity of multicast groups served by different RPs, and load unbalancing is caused between different RPs.

### SUMMARY

Embodiments of the present invention provide a multicast group allocation method, a centralized control point, and a multicast router, so as to resolve a problem of load unbalancing between different RPs.

According to a first aspect, an embodiment of the present invention provides a multicast group allocation method, including:
determining, by a centralized control point, a correspondence between at least two multicast groups and at least two rendezvous points RPs in a rendezvous point set according to information about the at least two multicast groups and information about the at least two RPs, where in the correspondence between the at least two multicast groups and the at least two RPs, each RP is corresponding to a same quantity of multicast groups;
evenly allocating, by the centralized control point, the at least two multicast groups to the at least two RPs according to the correspondence between the at least two multicast groups and the at least two RPs; and
diffusing, by the centralized control point, the correspondence between the at least two multicast groups and the at least two RPs to all multicast routers on a Protocol Independent Multicast PIM network.

According to the first aspect, in a first possible implementation of the first aspect, if the centralized control point is a bootstrap router BSR, before the determining, by a centralized control point, a correspondence between at least two multicast groups and at least two RPs in a rendezvous point set according to information about the at least two multicast groups and information about the at least two RPs, the method further includes:
receiving, by the centralized control point, advertisement messages sent by the at least two RPs;
obtaining, by the centralized control point, the information about the at least two RPs according to the advertisement messages sent by the at least two RPs; and
generating, by the centralized control point, the rendezvous point set according to the information about the at least two RPs.

According to the first aspect, in a second possible implementation of the first aspect, if the centralized control point is not a BSR, before the determining, by a centralized control point, a correspondence between at least two multicast groups and at least two RPs in a rendezvous point set according to information about the at least two multicast groups and information about the at least two RPs, the method further includes:
receiving, by the centralized control point, the rendezvous point set sent by the BSR, where the rendezvous point set is generated by the BSR according to the information about the at least two RPs that is obtained according to received advertisement messages sent by the at least two RPs.

According to any one of the first aspect to the second possible implementation of the first aspect, in a third possible implementation, the at least two multicast groups include an existing multicast group and a newly added multicast group; and
before the determining, by a centralized control point, a correspondence between at least two multicast groups and at least two RPs in a rendezvous point set according to information about the at least two multicast groups and information about the at least two RPs, the method further includes:
   receiving, by the centralized control point, information that is about the newly added multicast group and that is sent by a designated router DR connected to a multicast source, where the information about the newly added multicast group is multicast group information determined by the DR according to a
   received multicast stream and a correspondence between an existing RP and the existing multicast group.

According to a second aspect, an embodiment of the present invention provides a centralized control point, including:
a determining module, configured to determine a correspondence between at least two multicast groups and at least two rendezvous points RPs in a rendezvous point set according to information about the at least two multicast groups and information about the at least two RPs, where in the correspondence between the at least two multicast groups and the at least two RPs, each RP is corresponding to a same quantity of multicast groups;
an allocation module, configured to evenly allocate the at least two multicast groups to the at least two RPs according to the correspondence between the at least two multicast groups and the at least two RPs; and
a diffusion module, configured to diffuse the correspondence between the at least two multicast groups and the at least two RPs to all multicast routers on a Protocol Independent Multicast PIM network.

According to the second aspect, in a first possible implementation of the second aspect, if the centralized control point is a bootstrap router BSR, the centralized control point further includes:
a first receiving module, configured to: before the determining module determines the correspondence between the at least two multicast groups and the at least two RPs in the rendezvous point set according to the information about the at least two multicast groups and the information about the at least two RPs, receive advertisement messages sent by the at least two RPs;
an obtaining module, configured to obtain the information about the at least two RPs according to the advertisement messages sent by the at least two RPs; and
a generation module, configured to generate the rendezvous point set according to the information about the at least two RPs.

According to the second aspect, in a second possible implementation of the second aspect, if the centralized control point is not a BSR, the centralized control point further includes:
a second receiving module, configured to: before the determining module determines the correspondence between the at least two multicast groups and the at least two RPs in the rendezvous point set according to the information about the at least two multicast groups and the information about the at least two RPs, receive the rendezvous point set sent by the BSR, where the rendezvous point set is generated by the BSR according to the information about the at least two RPs that is obtained according to received advertisement messages sent by the at least two RPs.

According to any one of the second aspect to the second possible implementation of the second aspect, in a third possible implementation, the at least two multicast groups include an existing multicast group and a newly added multicast group; and
the centralized control point further includes:
   a third receiving module, configured to: before the determining module determines the correspondence between the at least two multicast groups and the at least two RPs in the rendezvous point set according to the information about the at least two multicast groups and the information about the at least two RPs, receive information that is about the newly added multicast group and that is sent by a designated router DR connected to a multicast source, where the information about the newly added multicast group is multicast group information determined by the DR according to a received multicast stream and a correspondence between an existing RP and the existing multicast group.

According to a third aspect, an embodiment of the present invention provides a multicast router, including:
a receiving module, configured to receive a correspondence that is between at least two multicast groups and at least two RPs and that is diffused by a centralized control point, where in the correspondence between the at least two multicast groups and the at least two RPs, each RP is corresponding to a same quantity of multicast groups; and
a determining module, configured to determine, according to the correspondence between the at least two multicast groups and the at least two rendezvous points RPs, an RP corresponding to a preset multicast group.

According to the third aspect, in a first possible implementation of the third aspect, the multicast router is a designated router DR connected to a multicast source, the at least two multicast groups include an existing multicast group and a newly added multicast group, and the preset multicast group is the newly added multicast group;
the receiving module is further configured to: before receiving the correspondence that is between the at least two multicast groups and the at least two RPs and that is diffused by the centralized control point, receive a multicast stream sent by the multicast source;
the determining module is further configured to determine the newly added multicast group according to the multicast stream and a correspondence between an existing RP and the existing multicast group; and
the multicast router further includes:
   a sending module, configured to send information about the newly added multicast group to the centralized control point.

According to the multicast group allocation method, the centralized control point, and the multicast router that are provided in the embodiments of the present invention, the centralized control point determines the correspondence between the at least two multicast groups and the at least two RPs in the RP set according to the information about the at least two multicast groups and the information about the at least two RPs, where in the correspondence between the at least two multicast groups and the at least two RPs, each RP is corresponding to a same quantity of multicast groups; the centralized control point evenly allocates the at least two multicast groups to the at least two RPs according to the correspondence between the at least two multicast groups and the at least two RPs; and the centralized control point diffuses the correspondence between the at least two multicast groups and the at least two RPs to all the multicast routers on the PIM network, so as to ensure load balancing between different RPs of the at least two RPs.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a multicast group allocation method according to Embodiment 1 of the present invention;
FIG. 2 is a flowchart of a multicast group allocation method according to Embodiment 2 of the present invention;
FIG. 3 is a flowchart of a multicast group allocation method according to Embodiment 3 of the present invention;
FIG. 4 is a flowchart of another multicast group allocation method according to Embodiment 3 of the present invention;
FIG. 5 is a flowchart of still another multicast group allocation method according to Embodiment 3 of the present invention;
FIG. 6 is a flowchart of a multicast group allocation method according to Embodiment 4 of the present invention;
FIG. 7 is a schematic structural diagram of a centralized control point according to Embodiment 5 of the present invention;
FIG. 8 is a schematic structural diagram of a multicast router according to Embodiment 6 of the present invention;
FIG. 9 is a schematic structural diagram of a centralized control point according to Embodiment 7 of the present invention; and
FIG. 10 is a schematic structural diagram of a multicast router according to Embodiment 8 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

### Embodiment 1

A method in this embodiment is applicable to a PIM network, particularly a Protocol Independent Multicast-Sparse Mode (English: Protocol Independent Multicast-Sparse Mode, PIM-SM for short) network, or a Bidirectional Protocol Independent Multicast (English: Bidirectional-Protocol Independent Multicast, Bidir-PIM for short) network.

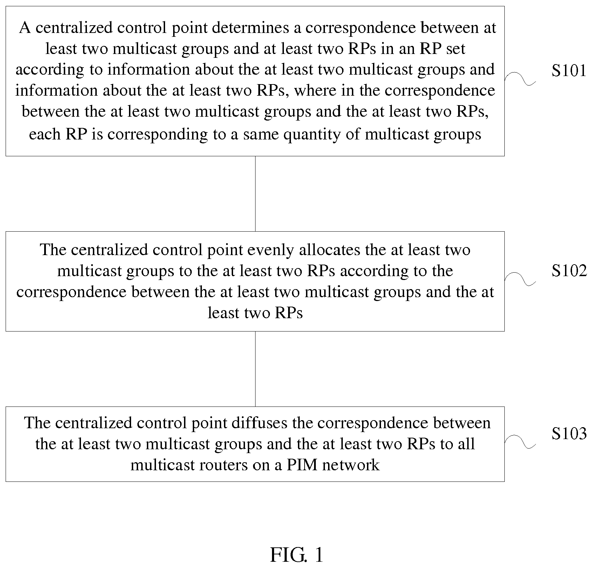

The method is performed by a centralized control point. The centralized control point may be used as an independent device in a manner of hardware or in a manner of a combination of hardware and software, for example, a multicast router, and exists on the PIM network. The centralized control point may further be used as an independent function module inside any multicast router on the PIM network in a manner of hardware and/or software, and is integrated into a corresponding multicast router on the PIM network. FIG. 1 is a flowchart of a multicast group allocation method according to Embodiment 1 of the present invention. As shown in FIG. 1, the method may include the following steps.

S101. A centralized control point determines a correspondence between at least two multicast groups and at least two RPs in an RP set according to information about the at least two multicast groups and information about the at least two RPs, where in the correspondence between the at least two multicast groups and the at least two RPs, each RP is corresponding to a same quantity of multicast groups.

The centralized control point may perform centralized processing on the multicast groups and the RPs according to the information about the at least two multicast groups and the information about the at least two RPs in the RP set, to determine the correspondence between the at least two multicast groups and the at least two RPs, so that in the correspondence between the at least two multicast groups and the at least two RPs, each RP is corresponding to the same quantity of multicast groups.

The RP set (Set) includes the information about the at least two RPs. The at least two RPs are at least two C-RPs. The at least two C-RPs may be at least two RPs that are on the PIM network and that are statically configured by a manager. Information about each RP in the RP set may include an address of the RP, a priority of the RP, and a range of a multicast group served by the RP. The range of the multicast group served by the RP may be indicated by a range of a distance to the address of the RP.

The centralized control point may determine one RP for each multicast group of the at least two multicast groups according to the information about the at least two multicast groups and the information about the at least two RPs, so that different RPs of the at least two RPs are corresponding to a same quantity of multicast groups, so as to determine the correspondence between the at least two multicast groups and the at least two RPs. In the correspondence between the at least two multicast groups and the at least two RPs, the at least two multicast groups may be respectively indicated by identifiers of the at least two multicast groups or indicated by identifiers of multicast streams corresponding to the at least two multicast groups. The at least two RPs may be respectively indicated by addresses of the at least two RPs. The centralized control point may determine one RP for each multicast group of the at least two multicast groups according to information, for example, address information, about a router included in each multicast group of the at least two multicast groups and according to a range, included in the information about the at least two RPs, of a multicast group served by each RP.

S102. The centralized control point evenly allocates the at least two multicast groups to the at least two RPs according to the correspondence between the at least two multicast groups and the at least two RPs.

The centralized control point may establish, according to the correspondence between the at least two multicast groups and the at least two RPs, a connection between each multicast group of the at least two multicast groups and an RP corresponding to each multicast group, so as to evenly allocate the at least two multicast groups to the at least two RPs.

S103. The centralized control point diffuses the correspondence between the at least two multicast groups and the at least two RPs to all multicast routers on a PIM network.

Specifically, the centralized control point may encapsulate the correspondence between the at least two multicast groups and the at least two RPs into a bootstrap message (English: bootstrap massage, BSM for short) according to a PIM protocol and send the bootstrap message to all the multicast routers on the PIM network.

According to the multicast group allocation method provided in Embodiment 1 of the present invention, the centralized control point can determine the correspondence between the at least two multicast groups and the at least two RPs in the RP set according to the information about the at least two multicast groups and the information about the at least two RPs, where in the correspondence between the at least two multicast groups and the at least two RPs, each RP is corresponding to a same quantity of multicast groups; the centralized control point evenly allocates the at least two multicast groups to the at least two RPs according to the correspondence between the at least two multicast groups and the at least two RPs; and the centralized control point diffuses the correspondence between the at least two multicast groups and the at least two RPs to all the multicast routers on the PIM network, so as to ensure load balancing between different RPs of the at least two RPs.

### Embodiment 2

Embodiment 2 of the present invention further provides a multicast group allocation method. Optionally, the centralized control point may be a router selected by running, by all multicast routers on a PIM network, a PIM protocol to exchange bootstrap messages. The centralized control point may be a bootstrap router (English: bootstrap router, BSR for short) or not a BSR. The centralized control point may be a different type of multicast router that obtains a rendezvous point set in a corresponding manner.

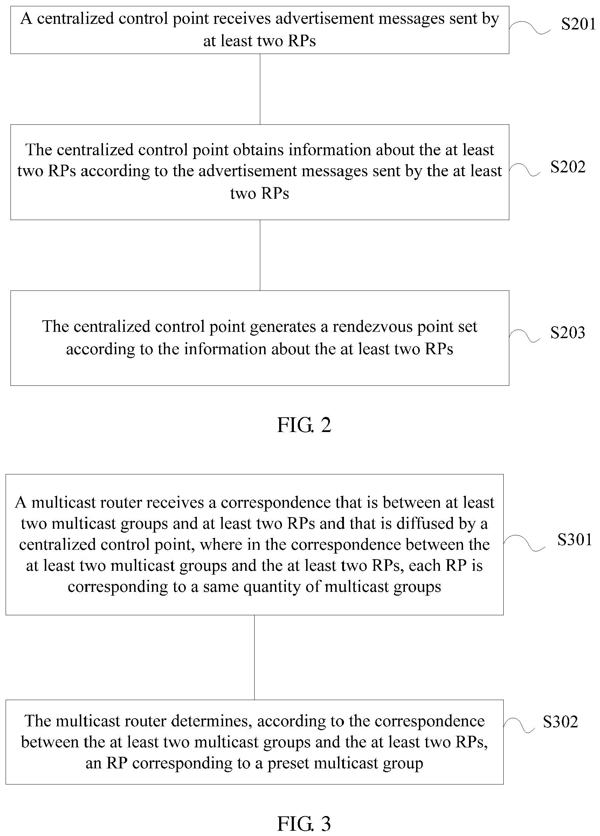

FIG. 2 is a flowchart of the multicast group allocation method according to Embodiment 2 of the present invention. As shown in FIG. 2, if the centralized control point is a BSR, before the determining, by a centralized control point, a correspondence between at least two multicast groups and at least two RPs in an RP set according to information about the at least two multicast groups and information about the at least two RPs in S101 in the multicast group method in Embodiment 1, the method may further include the following steps.

S201. The centralized control point receives advertisement messages sent by the at least two RPs.

S202. The centralized control point obtains the information about the at least two RPs according to the advertisement messages sent by the at least two RPs.

An advertisement message (Advertisement Message) sent by each RP of the at least two RPs may include an address of the RP, a priority of the RP, and a range of a multicast group served by the RP. The information about the at least two RPs may include addresses of the at least two RPs, priorities of the at least two RPs, and ranges of multicast groups served by the at least two RPs.

S203. The centralized control point generates the rendezvous point set according to the information about the at least two RPs.

The centralized control point may aggregate the information about the at least two RPs to generate the rendezvous point set. For example, the centralized control point may determine, according to the addresses of the at least two RPs and the ranges of the multicast groups served by the at least two RPs in the information about the at least two RPs, a table of a correspondence between each RP and a range of a multicast group served by each RP, and establish the RP set according to the table of the correspondence between each RP and the range of the multicast group served by each RP and according to the priorities of the at least two RPs.

Optionally, if the centralized control point is not a BSR, before the determining, by a centralized control point, a correspondence between at least two multicast groups and at least two RPs in an RP set according to information about the at least two multicast groups and information about the at least two RPs in S101 in the multicast group method in Embodiment 1, the method may further include:
receiving, by the centralized control point, the rendezvous point set sent by the BSR, where the rendezvous point set is generated by the BSR according to the information about the at least two RPs that is obtained according to received advertisement messages sent by the at least two RPs.

The rendezvous point set may be encapsulated by the BSR into a multicast message and transmitted to the centralized control point.

Optionally, the at least two multicast groups include an existing multicast group and a newly added multicast group.

Before the determining, by a centralized control point, a correspondence between at least two multicast groups and at least two RPs in a rendezvous point set according to information about the at least two multicast groups and information about the at least two RPs in S101, the method further includes:
receiving, by the centralized control point, information that is about the newly added multicast group and that is sent by a DR connected to a multicast source, where the information about the newly added multicast group is multicast group information determined by the DR according to a received multicast stream and a correspondence between an existing RP and the existing multicast group.

Specifically, after receiving the multicast stream sent by the multicast source, the DR determines, according to the multicast stream, information about a multicast group corresponding to the multicast stream, and queries the correspondence between the existing RP and the existing multicast group according to the information about the multicast group corresponding to the multicast stream. If the DR does not find, in the correspondence between the existing RP and the existing multicast group, an RP corresponding to the multicast group corresponding to the multicast stream, the DR determines that the multicast group corresponding to the multicast stream is the newly added multicast group. The correspondence between the existing RP and the existing multicast group may be pre-stored local information of all multicast routers on the PIM network. The centralized control point may receive the information that is about the newly added multicast group and that is sent by using a multicast message by the DR connected to the multicast source. In the solution of Embodiment 2, after obtaining the information about the newly added multicast group, the DR no longer determines, by means of hash (HASH) calculation, an RP corresponding to the newly added multicast group, but directly sends the information about the newly added multicast group to the centralized control point; and the centralized control point performs centralized hash calculation according to the newly added multicast group, the existing multicast group, and the correspondence between the existing RP and the existing multicast group, and determines, on a basis of ensuring that different RPs are corresponding to a same quantity of multicast groups, the RP corresponding to the newly added multicast group.

If the at least two multicast groups include an existing multicast group and a newly added multicast group, the centralized control point may diffuse, to all the multicast routers on the PIM network, correspondences between all multicast groups and RPs corresponding to all the multicast groups, including a correspondence between the newly added multicast group and an RP corresponding to the newly added multicast group. Alternatively, the centralized control point may diffuse, to all the multicast routers on the PIM network, only a correspondence between the newly added multicast group and an RP corresponding to the newly added multicast group.

According to the multicast group allocation method in Embodiment 2 of the present invention, multiple implementation solutions by using which the centralized control point obtains the rendezvous point set are provided, to ensure that the correspondence that is between the at least two multicast groups and the at least two RPs in the rendezvous point set and that is determined by the centralized control point according to the information about the at least two multicast groups and the information about the at least two RPs is more accurate, thereby ensuring load balancing between different RPs.

It should be noted that, after the centralized control point diffuses the correspondence between the at least two multicast groups and the at least two RPs to all the multicast routers on the PIM network, on the PIM network, the DR connected to the multicast source may encapsulate, into a register (register) message, a received multicast message including a multicast stream, and send, by means of unicast, the register message to an RP corresponding to a destination multicast group of the multicast stream, so that the RP corresponding to the destination multicast group registers the multicast source, and registration of the multicast source is implemented.

After receiving the register message sent by the DR connected to the multicast source, the RP corresponding to the destination multicast group obtains the multicast stream by decapsulating the register message and forwards the multicast stream to the destination multicast group along a multicast tree with the RP as a root and with the multicast group as a destination. The multicast tree may be a rendezvous point tree (English: rendezvous point tree, RPT for short). After receiving the register message sent by the DR connected to the multicast source, the RP corresponding to the destination multicast group further sends an (S, G) join (Join) message to the multicast source hop by hop, so that all routers between the RP corresponding to the destination multicast group and the multicast source generate (s, g) entries. These passed multicast routers form a branch of a source tree. The source tree may be a shortest path tree (English: shortest path tree, SPT for short).

After the source tree is generated, the multicast source sends, along the established source tree, a multicast stream to an RP corresponding to a destination multicast group of the multicast stream. Then, the RP corresponding to the destination multicast group forwards the multicast stream to the destination multicast group along the multicast tree, and then to a receive end device.

### Embodiment 3

Embodiment 3 of the present invention further provides a multicast group allocation method. The method may be performed by any multicast router of other multicast routers, excluding a centralized control point, on a PIM network. FIG. 3 is a flowchart of the multicast group allocation method according to Embodiment 3 of the present invention. As shown in FIG. 3, the method may include the following steps:
S301. A multicast router receives a correspondence that is between at least two multicast groups and at least two RPs and that is diffused by the centralized control point, where in the correspondence between the at least two multicast groups and the at least two RPs, each RP is corresponding to a same quantity of multicast groups.
S302. The multicast router determines, according to the correspondence between the at least two multicast groups and the at least two RPs, an RP corresponding to a preset multicast group.

The multicast router may be another multicast router excluding the centralized control point.

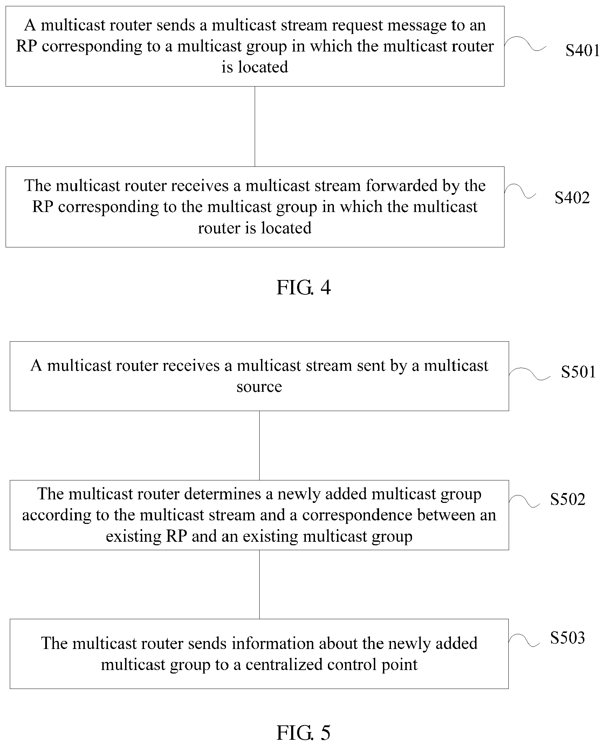

Optionally, the at least two multicast groups include an existing multicast group and a newly added multicast group, and the preset multicast group is the newly added multicast group. The multicast router is any router in the newly added multicast group. Embodiment 3 of the present invention further provides a multicast group allocation method. FIG. 4 is a flowchart of another multicast group allocation method according to Embodiment 3 of the present invention. As shown in FIG. 4, the method may further include the following steps:
S401. The multicast router sends a multicast stream request message to an RP corresponding to a multicast group in which the multicast router is located.
S402. The multicast router receives a multicast stream forwarded by the RP corresponding to the multicast group in which the multicast router is located.

Optionally, the multicast router is a DR connected to a multicast source, the at least two multicast groups include an existing multicast group and a newly added multicast group, and the preset multicast group is the newly added multicast group. Embodiment 3 of the present invention further provides still another multicast group allocation method. FIG. 5 is a flowchart of the still another multicast group allocation method according to Embodiment 3 of the present invention. As shown in FIG. 5, before the receiving, by a multicast router, a correspondence that is between at least two multicast groups and at least two RPs and that is diffused by the centralized control point in S301 in Embodiment 3, the method further includes the following steps.

S501. The multicast router receives a multicast stream sent by the multicast source.

S502. The multicast router determines the newly added multicast group according to the multicast stream and a correspondence between an existing RP and the existing multicast group.

The newly added multicast group is a destination multicast group corresponding to the multicast stream.

S503. The multicast router sends information about the newly added multicast group to the centralized control point.

Optionally, the correspondence between the at least two multicast groups and the at least two RPs in a rendezvous point set is determined by the centralized control point according to information about the at least two multicast groups and information about the at least two RPs.

Optionally, the centralized control point is a BSR, and the rendezvous point set is generated by the centralized control point according to the information about the at least two RPs that is obtained according to received advertisement messages sent by the at least two RPs.

Alternatively, the centralized control point may be not a BSR. The rendezvous point set is received by the centralized control point and sent by the BSR, and the rendezvous point set is generated by the BSR according to the information about the at least two RPs that is obtained according to received advertisement messages sent by the at least two RPs.

The multicast group allocation method provided in Embodiment 3 of the present invention is a method that is performed by another multicast router and that is corresponding to the multicast group allocation method performed by the centralized control point provided in Embodiment 1 or Embodiment 2. A beneficial effect of the multicast group allocation method is similar to that in the foregoing embodiments. Details are not described herein again.

### Embodiment 4

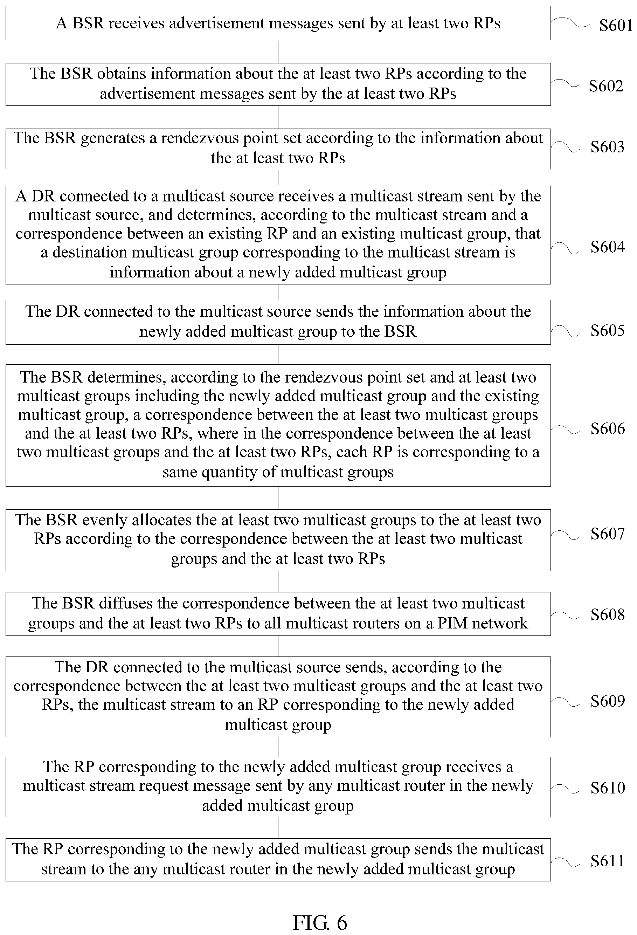

Embodiment 4 of the present invention further provides a multicast group allocation method. In this method, a specific instance is used to describe the method in any one of Embodiment 1 to Embodiment 3. In Embodiment 4, only a BSR is used as a centralized control point for description. A corresponding implementation process of a scenario in which the centralized control point is another router is similar to that in Embodiment 2. Details are not described herein again. FIG. 6 is a flowchart of the multicast group allocation method according to Embodiment 4 of the present invention. As shown in FIG. 6, the method may include the following steps.

S601. The BSR receives advertisement messages sent by at least two RPs.

S602. The BSR obtains information about the at least two RPs according to the advertisement messages sent by the at least two RPs.

An advertisement message (English: advertisement message) sent by each RP of the at least two RPs may include an address of the RP, a priority of the RP, and a range of a multicast group served by the RP.

S603. The BSR generates a rendezvous point set according to the information about the at least two RPs.

S604. A DR connected to a multicast source receives a multicast stream sent by the multicast source, and determines, according to the multicast stream and a correspondence between an existing RP and an existing multicast group, that a destination multicast group corresponding to the multicast stream is information about a newly added multicast group.

S605. The DR connected to the multicast source sends the information about the newly added multicast group to the BSR.

S606. The BSR determines, according to the rendezvous point set and at least two multicast groups including the newly added multicast group and the existing multicast group, a correspondence between the at least two multicast groups and the at least two RPs, where in the correspondence between the at least two multicast groups and the at least two RPs, each RP is corresponding to a same quantity of multicast groups.

S607. The BSR evenly allocates the at least two multicast groups to the at least two RPs according to the correspondence between the at least two multicast groups and the at least two RPs.

S608. The BSR diffuses the correspondence between the at least two multicast groups and the at least two RPs to all multicast routers on a PIM network.

S609. The DR connected to the multicast source sends, according to the correspondence between the at least two multicast groups and the at least two RPs, the multicast stream to an RP corresponding to the newly added multicast group.

S610. The RP corresponding to the newly added multicast group receives a multicast stream request message sent by any multicast router in the newly added multicast group.

S611. The RP corresponding to the newly added multicast group sends the multicast stream to the any multicast router in the newly added multicast group.

According to the multicast group allocation method provided in Embodiment 4 of the present invention, a specific instance is used to describe the method in any one of Embodiment 1 to Embodiment 3. A beneficial effect of the multicast group allocation method is similar to that in the foregoing embodiments. Details are not described herein again.

### Embodiment 5

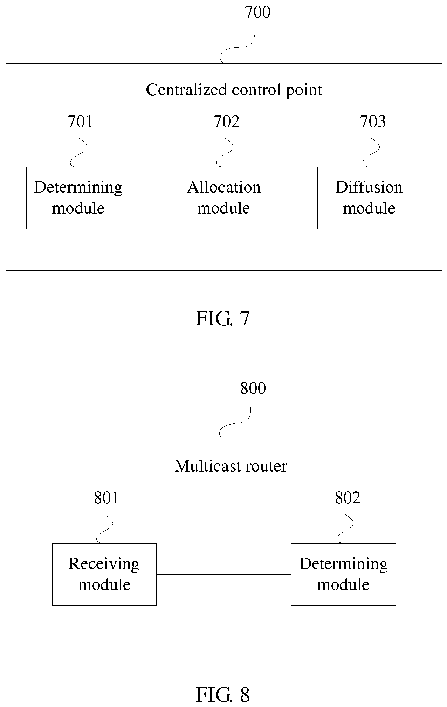

Embodiment 5 of the present invention further provides a centralized control point. The centralized control point in Embodiment 5 may perform the multicast group allocation method described in any one of Embodiment 1 or 2. FIG. 7 is a schematic structural diagram of the centralized control point according to Embodiment 5 of the present invention.

As shown in FIG. 7, the centralized control point 700 may include a determining module 701, an allocation module 702, and a diffusion module 703.

The determining module 701 may be configured to determine a correspondence between at least two multicast groups and at least two RPs in a rendezvous point set according to information about the at least two multicast groups and information about the at least two RPs. In the correspondence between the at least two multicast groups and the at least two RPs, each RP is corresponding to a same quantity of multicast groups.

The allocation module 702 may be configured to evenly allocate the at least two multicast groups to the at least two RPs according to the correspondence between the at least two multicast groups and the at least two RPs.

The diffusion module 703 may be configured to diffuse the correspondence between the at least two multicast groups and the at least two RPs to all multicast routers on a PIM network.

Optionally, if the centralized control point 700 is a BSR, the centralized control point 700 further includes:
a first receiving module, configured to: before the determining module 701 determines the correspondence between the at least two multicast groups and the at least two RPs in the rendezvous point set according to the information about the at least two multicast groups and the information about the at least two RPs, receive advertisement messages sent by the at least two RPs;
an obtaining module, configured to obtain the information about the at least two RPs according to the advertisement messages sent by the at least two RPs; and
a generation module, configured to generate the rendezvous point set according to the information about the at least two RPs.

If the centralized control point 700 is not a BSR, the centralized control point 700 may further include:
a second receiving module, configured to: before the determining module 701 determines the correspondence between the at least two multicast groups and the at least two RPs in the rendezvous point set according to the information about the at least two multicast groups and the information about the at least two RPs, receive the rendezvous point set sent by the BSR, where the rendezvous point set is generated by the BSR according to the information about the at least two RPs that is obtained according to received advertisement messages sent by the at least two RPs.

Optionally, the at least two multicast groups may include an existing multicast group and a newly added multicast group.

The centralized control point 700 further includes:
a third receiving module, configured to: before the determining module 701 determines the correspondence between the at least two multicast groups and the at least two RPs in the rendezvous point set according to the information about the at least two multicast groups and the information about the at least two RPs, receive information that is about the newly added multicast group and that is sent by a DR connected to a multicast source, where the information about the newly added multicast group is multicast group information determined by the DR according to a received multicast stream and a correspondence between an existing RP and the existing multicast group.

The centralized control point provided in Embodiment 5 of the present invention may perform the multicast group allocation method described in any one of Embodiment 1 or 2. A beneficial effect of the centralized control point is similar to that in the foregoing embodiments. Details are not described herein again.

### Embodiment 6

Embodiment 6 of the present invention further provides a multicast router. The multicast router in Embodiment 6 may perform the multicast group allocation method described in any one of Embodiment 3 or 4. FIG. 8 is a schematic structural diagram of the multicast router according to Embodiment 6 of the present invention. As shown in FIG. 8, the multicast router 800 may include a receiving module 801 and a determining module 802.

The receiving module 801 is configured to receive a correspondence that is between at least two multicast groups and at least two RPs and that is diffused by a centralized control point. In the correspondence between the at least two multicast groups and the at least two RPs, each RP is corresponding to a same quantity of multicast groups.

The determining module 802 is configured to determine, according to the correspondence between the at least two multicast groups and the at least two RPs, an RP corresponding to a preset multicast group.

Optionally, the at least two multicast groups include an existing multicast group and a newly added multicast group, and the preset multicast group is the newly added multicast group.

The multicast router 800 is any router in the newly added multicast group.

The multicast router 800 further includes:
a sending module, configured to send a multicast stream request message to the RP corresponding to the preset multicast group.

The receiving module 801 is further configured to receive a multicast stream forwarded by the RP corresponding to the preset multicast group.

Optionally, the multicast router 800 is a DR connected to a multicast source, the at least two multicast groups include an existing multicast group and a newly added multicast group, and the preset multicast group is the newly added multicast group.

The receiving module 801 is further configured to: before receiving the correspondence that is between the at least two multicast groups and the at least two RPs and that is diffused by the centralized control point, receive a multicast stream sent by the multicast source.

The determining module 802 is further configured to determine the newly added multicast group according to the multicast stream and a correspondence between an existing RP and the existing multicast group.

The sending module is configured to send information about the newly added multicast group to the centralized control point.

Optionally, the correspondence between the at least two multicast groups and the at least two RPs in a rendezvous point set is determined by the centralized control point according to information about the at least two multicast groups and information about the at least two RPs.

Optionally, if the centralized control point is a BSR, the rendezvous point set is generated by the centralized control point according to the information about the at least two RPs that is obtained according to received advertisement messages sent by the at least two RPs.

Optionally, if the centralized control point is not a BSR, the rendezvous point set is received by the centralized control point and sent by the BSR, and the rendezvous point set is generated by the BSR according to the information about the at least two RPs that is obtained according to received advertisement messages sent by the at least two RPs.

The multicast router in Embodiment 6 of the present invention may perform the multicast group allocation method described in any one of Embodiment 3 or 4. A beneficial effect of the multicast router is similar to that in the foregoing embodiments. Details are not described herein again.

### Embodiment 7

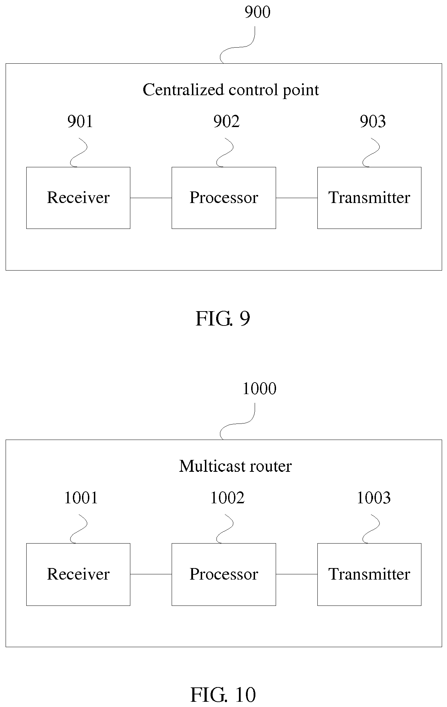

Embodiment 7 of the present invention further provides a centralized control point. The centralized control point in Embodiment 7 may perform the multicast group allocation method described in any one of Embodiment 1 or 2. FIG. 9 is a schematic structural diagram of the centralized control point according to Embodiment 7 of the present invention.

As shown in FIG. 9, the centralized control point 900 may include a receiver 901, a processor 902, and a transmitter 903.

The processor 902 may be configured to: determine a correspondence between at least two multicast groups and at least two RPs in a rendezvous point set according to information about the at least two multicast groups and information about the at least two RPs, and evenly allocate the at least two multicast groups to the at least two RPs according to the correspondence between the at least two multicast groups and the at least two RPs. In the correspondence between the at least two multicast groups and the at least two RPs, each RP is corresponding to a same quantity of multicast groups.

The transmitter 903 may be configured to diffuse the correspondence between the at least two multicast groups and the at least two RPs to all multicast routers on a PIM network.

Optionally, if the centralized control point 900 is a BSR, the receiver 901 is further configured to receive, before the processor 902 determines the correspondence between the at least two multicast groups and the at least two RPs in the rendezvous point set according to the information about the at least two multicast groups and the information about the at least two RPs, advertisement messages sent by the at least two RPs.

The processor 902 is further configured to: obtain the information about the at least two RPs according to the advertisement messages sent by the at least two RPs, and generate the rendezvous point set according to the information about the at least two RPs.

Alternatively, if the centralized control point 900 is not a BSR, the receiver 901 is further configured to receive, before the processor 902 determines the correspondence between the at least two multicast groups and the at least two RPs in the rendezvous point set according to the information about the at least two multicast groups and the information about the at least two RPs, the rendezvous point set sent by the BSR. The rendezvous point set is generated by the BSR according to the information about the at least two RPs that is obtained according to received advertisement messages sent by the at least two RPs.

Optionally, the at least two multicast groups may include an existing multicast group and a newly added multicast group.

Optionally, the receiver 901 is further configured to receive, before the processor 902 determines the correspondence between the at least two multicast groups and the at least two RPs in the rendezvous point set according to the information about the at least two multicast groups and the information about the at least two RPs, information that is about the newly added multicast group and that is sent by a DR connected to a multicast source. The information about the newly added multicast group is multicast group information determined by the DR according to a received multicast stream and a correspondence between an existing RP and the existing multicast group.

The centralized control point provided in Embodiment 7 of the present invention may perform the multicast group allocation method described in any one of Embodiment 1 or 2. A beneficial effect of the centralized control point is similar to that in the foregoing embodiments. Details are not described herein again.

### Embodiment 8

Embodiment 8 of the present invention further provides a multicast router. The multicast router in Embodiment 8 may perform the multicast group allocation method described in any one of Embodiment 3 or 4. FIG. 10 is a schematic structural diagram of the multicast router according to Embodiment 8 of the present invention. As shown in FIG. 10, the multicast router 1000 may include a receiver 1001, a processor 1002, and a transmitter 1003.

The receiver 1001 is configured to receive a correspondence that is between at least two multicast groups and at least two RPs and that is diffused by a centralized control point. In the correspondence between the at least two multicast groups and the at least two RPs, each RP is corresponding to a same quantity of multicast groups.

The processor 1002 is configured to determine, according to the correspondence between the at least two multicast groups and the at least two RPs, an RP corresponding to a preset multicast group.

Optionally, the at least two multicast groups include an existing multicast group and a newly added multicast group, and the preset multicast group is the newly added multicast group.

The multicast router 1000 is any router in the newly added multicast group.

The transmitter 1003 is configured to send a multicast stream request message to the RP corresponding to the preset multicast group.

The receiver 1001 is further configured to receive a multicast stream forwarded by the RP corresponding to the preset multicast group.

Optionally, the multicast router 1000 is a DR connected to a multicast source, the at least two multicast groups include an existing multicast group and a newly added multicast group, and the preset multicast group is the newly added multicast group.

The receiver 1001 is further configured to: before receiving the correspondence that is between the at least two multicast groups and the at least two RPs and that is diffused by the centralized control point, receive a multicast stream sent by the multicast source.

The processor 1002 is further configured to determine the newly added multicast group according to the multicast stream and a correspondence between an existing RP and the existing multicast group.

The transmitter 1003 is configured to send information about the newly added multicast group to the centralized control point.

Optionally, the correspondence between the at least two multicast groups and the at least two RPs in a rendezvous point set is determined by the centralized control point according to information about the at least two multicast groups and information about the at least two RPs.

Optionally, if the centralized control point is a BSR, the rendezvous point set is generated by the centralized control point according to the information about the at least two RPs that is obtained according to received advertisement messages sent by the at least two RPs.

Optionally, if the centralized control point is not a BSR, the rendezvous point set is received by the centralized control point and sent by the BSR, and the rendezvous point set is generated by the BSR according to the information about the at least two RPs that is obtained according to received advertisement messages sent by the at least two RPs.

The multicast router in Embodiment 8 of the present invention may perform the multicast group allocation method described in any one of Embodiment 3 or 4. A beneficial effect of the multicast router is similar to that in the foregoing embodiments. Details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A multicast group allocation method, comprising:
determining, by a centralized control point, a correspondence between at least two multicast groups and at least two rendezvous points RPs in a rendezvous point set according to information about the at least two multicast groups and information about the at least two RPs, wherein in the correspondence between the at least two multicast groups and the at least two RPs, each RP is corresponding to a same quantity of multicast groups;
evenly allocating, by the centralized control point, the at least two multicast groups to the at least two RPs according to the correspondence between the at least two multicast groups and the at least two RPs; and
diffusing, by the centralized control point, the correspondence between the at least two multicast groups and the at least two RPs to all multicast routers on a Protocol Independent Multicast PIM network.

2. The method according to claim 1, wherein if the centralized control point is a bootstrap router BSR, before the determining, by a centralized control point, a correspondence between at least two multicast groups and at least two RPs in a rendezvous point set according to information about the at least two multicast groups and information about the at least two RPs, the method further comprises:
receiving, by the centralized control point, advertisement messages sent by the at least two RPs;
obtaining, by the centralized control point, the information about the at least two RPs according to the advertisement messages sent by the at least two RPs; and
generating, by the centralized control point, the rendezvous point set according to the information about the at least two RPs.

3. The method according to claim 1, wherein if the centralized control point is not a BSR, before the determining, by a centralized control point, a correspondence between at least two multicast groups and at least two RPs in a rendezvous point set according to information about the at least two multicast groups and information about the at least two RPs, the method further comprises:
receiving, by the centralized control point, the rendezvous point set sent by the BSR, wherein the rendezvous point set is generated by the BSR according to the information about the at least two RPs that is obtained according to received advertisement messages sent by the at least two RPs.

4. The method according to any one of claims 1 to 3, wherein the at least two multicast groups comprise an existing multicast group and a newly added multicast group; and
before the determining, by a centralized control point, a correspondence between at least two multicast groups and at least two RPs in a rendezvous point set according to information about the at least two multicast groups and information about the at least two RPs, the method further comprises:
receiving, by the centralized control point, information that is about the newly added multicast group and that is sent by a designated router DR connected to a multicast source, wherein the information about the newly added multicast group is multicast group information determined by the DR according to a received multicast stream and a correspondence between an existing RP and the existing multicast group.

5. A centralized control point, comprising:
a determining module, configured to determine a correspondence between at least two multicast groups and at least two rendezvous points RPs in a rendezvous point set according to information about the at least two multicast groups and information about the at least two RPs, wherein in the correspondence between the at least two multicast groups and the at least two RPs, each RP is corresponding to a same quantity of multicast groups;
an allocation module, configured to evenly allocate the at least two multicast groups to the at least two RPs according to the correspondence between the at least two multicast groups and the at least two RPs; and
a diffusion module, configured to diffuse the correspondence between the at least two multicast groups and the at least two RPs to all multicast routers on a Protocol Independent Multicast PIM network.

6. The centralized control point according to claim 5, wherein if the centralized control point is a bootstrap router BSR, the centralized control point further comprises:
a first receiving module, configured to: before the determining module determines the correspondence between the at least two multicast groups and the at least two RPs in the rendezvous point set according to the information about the at least two multicast groups and the information about the at least two RPs, receive advertisement messages sent by the at least two RPs;
an obtaining module, configured to obtain the information about the at least two RPs according to the advertisement messages sent by the at least two RPs; and
a generation module, configured to generate the rendezvous point set according to the information about the at least two RPs.

7. The centralized control point according to claim 5, wherein if the centralized control point is not a BSR, the centralized control point further comprises:
a second receiving module, configured to: before the determining module determines the correspondence between the at least two multicast groups and the at least two RPs in the rendezvous point set according to the information about the at least two multicast groups and the information about the at least two RPs, receive the rendezvous point set sent by the BSR, wherein the rendezvous point set is generated by the BSR according to the information about the at least two RPs that is obtained according to received advertisement messages sent by the at least two RPs.

8. The centralized control point according to any one of claims 5 to 7, wherein the at least two multicast groups comprise an existing multicast group and a newly added multicast group; and
the centralized control point further comprises:
a third receiving module, configured to: before the determining module determines the correspondence between the at least two multicast groups and the at least two RPs in the rendezvous point set according to the information about the at least two multicast groups and the information about the at least two RPs, receive information that is about the newly added multicast group and that is sent by a designated router DR connected to a multicast source, wherein the information about the newly added multicast group is multicast group information determined by the DR according to a received multicast stream and a correspondence between an existing RP and the existing multicast group.

9. A multicast router, comprising:
a receiving module, configured to receive a correspondence that is between at least two multicast groups and at least two RPs and that is diffused by a centralized control point, wherein in the correspondence between the at least two multicast groups and the at least two RPs, each RP is corresponding to a same quantity of multicast groups; and
a determining module, configured to determine, according to the correspondence between the at least two multicast groups and the at least two rendezvous points RPs, an RP corresponding to a preset multicast group.

10. The multicast router according to claim 9, wherein the multicast router is a designated router DR connected to a multicast source, the at least two multicast groups comprise an existing multicast group and a newly added multicast group, and the preset multicast group is the newly added multicast group;
the receiving module is further configured to: before receiving the correspondence that is between the at least two multicast groups and the at least two RPs and that is diffused by the centralized control point, receive a multicast stream sent by the multicast source;
the determining module is further configured to determine the newly added multicast group according to the multicast stream and a correspondence between an existing RP and the existing multicast group; and
the multicast router further comprises:
a sending module, configured to send information about the newly added multicast group to the centralized control point.
